# EUROPÄISCHE PATENTANMELDUNG

(11) **EP 2 390 594 A2**
(43) Veröffentlichungstag der Anmeldung: **30.11.2011**
(21) Anmeldenummer: 11167782.9
(22) Anmeldetag: 26.05.2011
(51) Int. Cl.: F24H 8/00

(54) **Vorrichtung zur Erwärmung von Medien**

(30) Priorität: 26.05.2010 DE 102010021519
(71) Anmelder: Gealan Formteile GmbH, 95145 Oberkotzau (DE)
(72) Erfinder: Braun, Thomas, 95234 Sparneck (DE); Schaller, Stefan, 95111 Rehau (DE); Saunus, Christian, 08223 Grünbach (DE)
(74) Vertreter: Fleuchaus, Michael A.

(57) **Zusammenfassung**

Vorrichtung zur Erwärmung von Medien, vorzugweise ein Brennwertgerät, aufweisendein luftdichtes Gehäuse (1), wenigstens einen innerhalb des Gehäuses mündenden Zuluftkanal (2), wenigstens einen innerhalb des Gehäuses angeordneten Kessel (3), der eine Brennkammer aufweist, innerhalb derer ein Brenner ein Brennstoff-Luft-Gemisch verbrennt, wenigstens ein Ansauggebläse (6), welches dem Brenner Verbrennungsluft zuführt und wenigstens einen Abluftkanal (7) zur Ableitung der bei der Verbrennung entstehenden Verbrennungsabgase, dadurch gekennzeichnet, dass wenigstens ein Verbrennungsluftkanal (6) vorgesehen ist, welcher sich zumindest teilweise um einen Kessel (3) herum erstreckt und mit diesem thermisch verbunden ist, und wobei der Verbrennungsluftkanal (6) die Mündung (10) des Zuluftkanals (2) mit der Ansaugöffnung (11) des Ansauggebläses (6) luftdicht verbindet.

## Beschreibung

Die Erfindung betrifft eine Vorrichtung zur Erwärmung von Medien und insbesondere Heizungsanlagen, welche mit Brennwerttechnik arbeiten.

Vorrichtungen der eingangs genannten Art sind im Stand der Technik unter Anderem auch als sog. Brennwertgeräte bekannt und werden beispielsweise für Heizungsanlagen zur Warmwasserbereitung verwendet. Diese Technologie weist gegenüber herkömmlichen Heizungsanlagen den Vorteil auf, dass der im Abgas enthaltene Wasserdampf auskondensiert wird und die dabei entstehende Kondensationswärme zur Verbesserung des Systemwirkungsgrades genutzt wird. Hieraus resultieren emissionsarme und energiesparende Systeme.

Bekannten Brennwertgeräte für die Gebäudeheizung üblicher Bauart weisen hierzu ein Gehäuse auf, in dem ein Kessel zur Erwärmung eines Heizungsmediums, üblicherweise Wasser, angeordnet ist. Zur Versorgung des im Kessel angeordneten Brenners mit Verbrennungsluft ist ein Zuluftkanal vorgesehen, welcher innerhalb des Gehäuses mündet. Die Verbrennungsluft dann wiederum mittels eines Ansauggebläses aus dem Gehäuseinnenraum angesaugt.

Zur Ableitung der Verbrennungsabgase ist ein Abluftkanal vorgesehen.

Die innerhalb des Gehäuses von der Mündung des Zuluftkanals bis zur Ansaugöffnung des Ansauggebläses strömende Luft erwärmt sich teilweise durch die vom Kessel abgestrahlte Wärme. Hierdurch erhöht sich die Effizienz des Heizgerätes. Allerdings erfolgt die Erwärmung nur unspezifisch, das heißt, dass Luft, die zwar innerhalb des Gehäuses aber entlang der Gehäusewandungen strömt nur geringfügig oder garnicht erwärmt wird, oder, wenn die äußeren Bedingungen entsprechend sind, sogar abgekühlt wird, was zu vermeiden ist.

Um bei derartig ausgeführten Brennwertgeräten sicher zu stellen, dass die dem Gehäuse entnommene Verbrennungsluft nicht aus der unmittelbaren Umgebung des Gehäuses angesaugt wird sondern ausschließlich durch den Zuluftkanal sind deren Gehäuse regelmäßig luftdicht ausgeführt, was mitunter einen erheblichen konstruktiven Aufwand mit sich bringt. Ein Ansaugen von Raumlauft, also Luft aus der Umgebung des Gerätes, ist unbedingt zu verhindern, da es hier zu einer gefährlichen Sauerstoffverknappung kommen könnte.

Danach liegt der vorliegenden Erfindung liegt die Aufgabe zugrunde, eine verbesserte Vorrichtung zur Erwärmung von Medien der eingangs genannten Art zur Verfügung zu stellen, welche insbesondere eine verbesserte Funktionalität bei einfacher Bauweise aufweist.

Erfindungsgemäß wird die voranstehende Aufgabe durch eine Vorrichtung zur Erwärmung von Medien mit den Merkmalen des Patentanspruchs 1 gelöst. Bevorzugte Ausführungsformen sind Gegenstand der abhängigen Ansprüche.

Danach weist eine Vorrichtung zur Erwärmung von Medien gemäß der Erfindung, welche vorzugsweise ein Brennwertgerät ist ein luftdichtes Gehäuse auf, wenigstens einen innerhalb des Gehäuses mündenden Zuluftkanal und wenigstens einen innerhalb des Gehäuses angeordneten Kessel, der eine Brennkammer aufweist, innerhalb derer ein Brenner ein Brennstoff-Luft-Gemisch verbrennt. Weiterhin weist eine derartige erfindungsgemäß ausgeführte Vorrichtung wenigstens ein Ansauggebläse auf, welches dem Brenner Verbrennungsluft zuführt und wenigstens einen Abluftkanal zur Ableitung der bei der Verbrennung entstehenden Verbrennungsabgase. Erfindungsgemäß ist wenigstens ein Verbrennungsluftkanal vorgesehen, welcher sich zumindest teilweise um zumindest einen der Kessel herum erstreckt und mit diesem thermisch verbunden ist, wobei der Verbrennungsluftkanal die Mündung des Zuluftkanals mit der Ansaugöffnung des Ansauggebläses luftdicht verbindet.

Die thermische Verbindung zwischen dem Kessel und dem Verbrennungsluftkanal gewährleistet, dass Abwärme vom Kessel der durch den Verbrennungsluftkanal strömenden Verbrennungsluft gezielter zugeführt wird, so dass eine verbesserte Erwärmung der Verbrennungsluft erfolgt. Überdies entfällt durch die luftdichte Verbindung der Mündung des Zuluftkanals mit der Ansaugöffnung des Ansaugluftgebläses das Erfordernis der luftdichten Abdichtung des Gehäuses, wodurch der konstruktive Aufwand derartiger Geräte erheblich verringert werden kann. Das Ansaugen von Raumluft wir auch für den Fall eines zum Wohnraum hin offenen Gehäuse durch die erfindungsgemäße Ausführung der luftdichten Verbindung der Mündung des Zuluftkanals mit der Ansaugöffnung des Ansaugluftgebläses sicher vermieden.

Bei dem erfindungsgemäßen Gerät wird also durch das Ansauggebläse vermittels des Verbrennungsluftkanals Verbrennungsluft über den Zuluftkanal angesaugt, welche beim Durchströmen des Verbrennungsluftkanals erwärmt wird. Durch die Verbesserte Erwärmung der Verbrennungsluft mittels der erfindungsgemäßen Vorrichtung kann der Brennstoffverbrauch reduziert werden.

Eine bevorzugte Ausführungsform der Erfindung weist einen im wesentlichen rund ausgestalteten Kessel auf, um den herum sich von der Geräteoberseite, an der sich die Mündung des Zuluftkanals befindet, nach unten ein- oder beidseitig ein bzw. zwei oder mehrere Verbrennungsluftkanäle erstrecken. Selbstverständlich kann die Geometrie des Kessels aber auch anders ausgeführt sein. Es ist möglich, an mehreren Seiten des Kessels entsprechende Verbrennungsluftkanäle anzuordnen und so die Abwärme des Kessels mit großer Effizienz in die Verbrennungsluft einzuleiten.

Soweit die Vorrichtung eine Mehrzahl von Verbrennungsluftkanälen aufweist können diese Kanäle als separate Bauteile oder als Kombination von Bauteilen oder als ein Bauteil ausgeführt sein. Die Kanäle könnten eine halbkreis- oder halbmondförmige Form aufweisen, so dass diese optimal auf die Form des Kessels angepasst sind.

Zur Erzielung des thermischen Kontakts zwischen dem Kessel und dem Verbrennungsluftkanal kann ein direkter Kontakt zumindest von Teilen der Außenwände der beiden Komponenten ausreichend sein. Bei einer Weiterbildung kann dieser Kontakt allerdings auch noch durch entsprechende die Wärmeleitung erhöhende Maßnahmen verbessert werden, wie z. B. Wärmeleitpasten oder -matten oder geometrisch aneinander angepasste Formen der Komponenten, so dass ein im wesentlichen formschlüssiger bzw. flächiger Kontakt entsteht.

Bei einer weiteren bevorzugten Ausführungsform der Erfindung erstreckt sich zudem der Abluftkanal vorzugsweise vollständig innerhalb des Verbrennungsluftkanals, wobei der Verbrennungsluftkanal und der Abluftkanal voneinander hermetisch getrennt sind.

Bei dieser Ausführungsform wird sicher gestellt, dass zusätzlich zur Kessel-Abwärme nach dem Prinzip des Gegenstromkühlers auch den Verbrennungsabgasen thermische Energie entzogen wird, so dass eine weitere Erwärmung der Verbrennungsluft innerhalb des Verbrennungsluftkanals erfolgt. Es findet also ein Wärmeaustausch zwischen den Verbrennungsabgasen und der der Verbrennung zugeführten Verbrennungsluft statt.

Dabei erfolgt bevorzugt eine Abkühlung der Verbrennungsabgase, die zu einer Kondensation von in den Verbrennungsabgasen enthaltenen Flüssigbestandteilen führt. Durch das Entstehen von Kondensationswärme wird dem System hier wiederum Wärme zugeführt, die der Verbrennungsluft (Zuluft) zugeführt wird. Um das dabei entstehende Kondensat abzuleiten ist einem tief liegenden Punkt und vorzugsweise am tiefsten Punkt des Abluftkanals ein Kondensatabfluss einstückig mit dem Abluftkanal verbunden angeordnet. Im Fall der Anordnung des Abgaskanals innerhalb des Verbrennungsluftkanals erstreckt sich der Kondensatabfluss dabei durch den Verbrennungsluftkanal hindurch, wobei dennoch bevorzugt eine hermetische Abdichtung der beiden Kanalsysteme voneinander besteht.

Bei einer Weiterbildung dieser Ausführungsform gewährleistet die hermetische Abtrennung von Verbrennungsluftkanal und Abluftkanal, dass keine Verbrennungsabgase aus dem Abgasstrang zurück in den Zuluftstrang gelangen können.

Alternativ ist es möglich, dass über ein gegebenenfalls geregeltes Abgasrückführungssystem eine Rückführung geringer Mengen von Verbrennungsabgasen in die Verbrennungsluft erfolgen kann, was sowohl eine weitere Erwärmung derselben zur Folge hätte als auch eine Beeinflussung des Schadstoffgehaltes der Verbrennungsabgase.

Eine derartige Abgasrückführung erfolgt im Fall der Anordnung des Abgaskanals innerhalb des Verbrennungsluftkanals bevorzugt im Bereich der "kalten" Seite des Abgaskanals, also nach der Wärmeabgabe der Abgaswärme hin zur Verbrennungsluft (Zuluft), da hier bevorzugt bereits eine Kondensation von im Verbrennungsabgas enthaltenem Wasser erfolgt ist.

Bevorzugt sind zumindest Teilbereiche des Verbrennungsluftkanals und/oder des Abluftkanals als Wellrohr ausgestaltet. Unter einem Wellrohr im Sinne dieser Erfindung ist dabei ein Rohr zu verstehen, dessen Wandungen eine undulierende Form jedweder Art aufweisen, also Vertiefungen und Ausbuchgungen, wobei derartige Vertiefungen und Ausbuchgungen regelmäßig oder unregelmäßig angeordnet sein können.

Technisch bedingt eine derartige Ausführung des Verbrennungsluftkanals und/oder des Abluftkanals in Form eines Wellrohres eine Vergrößerung der Oberfläche, was wiederum zu einem verbesserten Wärmeübergang beispielsweise zwischen Kessel und Verbrennungsluft führt. Darüber hinaus werden durch eine derartig unregelmäßige Wandung des Verbrennungsluftkanals und/oder des Abluftkanals Strömungswirbel innerhalb der Verbrennungsluft bzw. des Verbrennungsabgases erzeugt, welche zu einer nicht-laminaren und damit auch langsameren Strömung der Gase innerhalb der Kanäle führen.

Durch beide Maßnahmen kann auch die Effizienz des Wärmeübergangs, insbesondere im Falle der Anordnung des Abgaskanals innerhalb des Verbrennungsluftkanals ("Gegenstromkühler") erhöht werden.

Bevorzugt ist der Abluftkanal im wesentlichen zentrisch innerhalb des Verbrennungsluftkanals angeordnet, so dass der Wärmeübergang vom Verbrennungsabgas zur Verbrennungsluft verbessert ist. Allerdings ist auch denkbar, dass eine Anordnung gewählt wird, bei der der Verbrennungsluftkanal quasi zwischen Kesselaußenwand und Abgaskanal angeordnet ist (also nicht zentrisch sondern außermittig zur Kesselseite des Verbrennungsluftkanals, so dass ein maximaler Wärmeübergang aus beiden Richtungen erfolgt.

Zur weiteren Optimierung des Wärmeaustauschs sind bei einer weiteren Ausführungsform der Erfindung innerhalb des Verbrennungsluftkanals und/oder des Abluftkanals Störungselemente vorgesehen, welche ebenfalls zum Einen zu einer Vergrößerung der Wärmetauscherfläche führen und zum andern den Aufbau einer laminarer Strömungen der Verbrennungsluft bzw. des Verbrennungsabgases reduzieren. Die technischen Effekte entsprechen dabei den mit Bezug auf die Wellrohrartige Ausführung des Verbrennungsluftkanals und/oder des Abluftkanals gemachten Ausführungen.

Ein Beispiel für Störungselemente sind lamellenartige Luftleitrippen am Umfang des Verbrennungsluftkanals und/oder des Abluftkanals, welche in den Luft- bzw. Abgasstrom hineinragen. Die Luftleitrippe könnte hierbei zusätzlich Stege aufweisen, die sich in den Strömungsverlauf erstrecken, so dass die Luft verwirbelt wird. Alternativ könnten auch im Bereich der Mitte der Kanäle Strömungshindernisse vorgesehen sein, die zu entsprechenden Verwirbelungen der Zuluft bzw. des Abgases führen.

Im Hinblick auf eine besonders einfache Fertigung könnte der Verbrennungsluftkanal und/oder der Abluftkanal aus wenigstens zwei Halbschalen gebildet werden, welche bevorzugt voneinander getrennt gefertigt sind. Vorzugsweise sind die Halbschalen durch Schweißen miteinander verbunden, beispielsweise durch Laserschweißen, Reibschweißen und/oder Spiegelschweißen.

Überdies wird bei einer bevorzugte Ausführungsform der Erfindung im Fall der Anordnung des Abgaskanals innerhalb des Verbrennungsluftkanals das Kanalsystem durch "Doppelhalbschalen" gebildet, bei welchen die Kanalhälften einstückig miteinander verbunden gefertigt sind.

Die Halbschalen könnten in diesen Fällen in besonders einfacher Weise durch Spritzgießtechnik gefertigt sein sofern diese aus Kunststoff gefertigt sind. Für den Fall einer Fertigung der Halbschalen aus Metall käme zudem bevorzugt Schmieden, Druckguß und dergleichen als Verarbeitungstechnik in Frage.

Es gibt nun verschiedenen Möglichkeiten, die Lehre der vorliegenden Erfindung in vorteilhafter Weise auszugestalten und weiterzubilden. Dazu ist auf die nachfolgende Erläuterung eines bevorzugten Ausführungsbeispiels einer erfindungsgemäßen Vorrichtung zur Erwärmung von Medien anhand der Zeichnung zu verweisen. In Verbindung mit dieser Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigt
- Fig. 1: eine schematische Darstellung einer erfindungsgemäßen Vorrichtung;
- Fig. 2: einen Ausschnitt des Verbrennungsluftkanalsystems gemäß einer weiteren Ausführungsform;

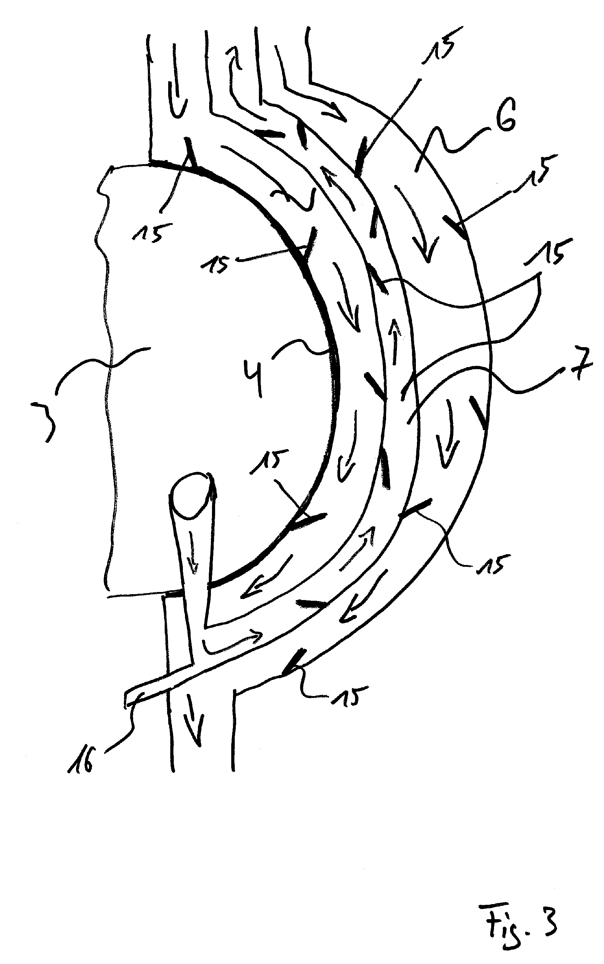

- Fig. 3: einen Ausschnitt des Abluft- und Verbrennungsluftkanalsystems gemäß einer weiteren Ausführungsform.

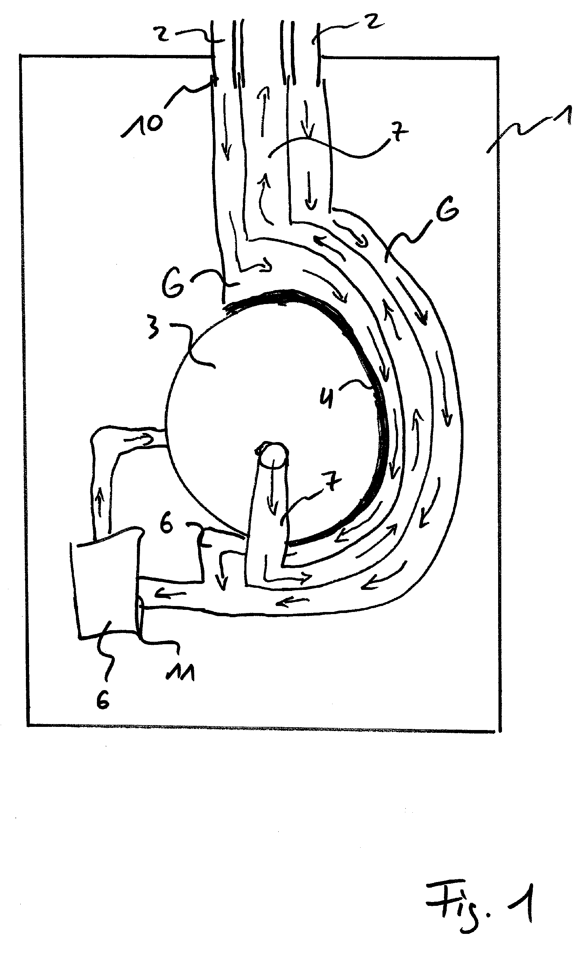

In Fig. 1 ist in einer erfindungsgemäßen Vorrichtung innerhalb eines Gehäuses (1) ein Kessel (3) angeordnet mit einem Abluftkanal (7), einem sich um den Kessel erstreckenden mit Wärmeleitvermittler (4) thermisch verbundenen Verbrennungsluftkanal (6) und ein Ansauggebläse (6) gezeigt. Der Verbrennungsluftkanal (6) leitet Verbrennungsluft von der Mündung (10) des Zuluftkanals (2) zur Ansaugöffnung (11) des Ansauggebläses (6). Der Verbrennungsluftkanal ist gegenüber dem Gehäuseinnenraum luftdicht. Innerhalb des Verbrennungslufkanals (6) erstreckt sich der Abluftkanal (7), so dass ein Wärmeaustausch zwischen Verbrennungsluft und Abluft stattfindet. Die Pfeile in Fig. 1 zeigen die jeweilige Strömungsrichtung der Gase.

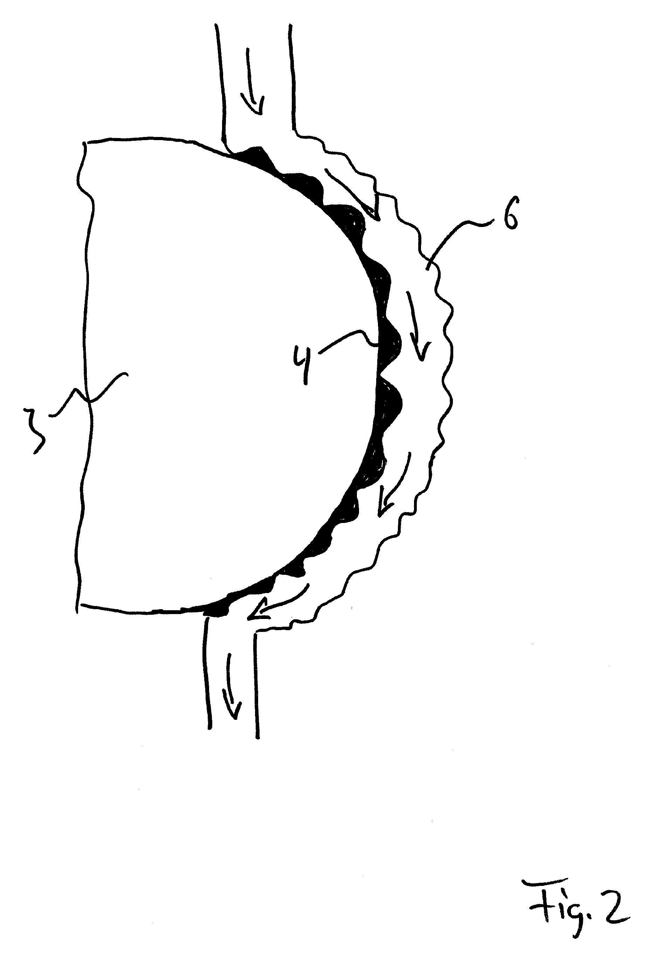

Fig. 2 zeigt eine alternative Ausführungsform, bei welcher innerhalb des Verbrennungsluftkanals (6) kein Abluftkanal angeordnet ist und wobei der Verbrennungsluftkanal (6) wellrohrartig ausgeführt ist. Zwischen der Kesseloberfläche und der Wandung des Wellrohres ist wiederum ein Wärmeleitvermittler (4) angeordnet.

Fig. 2 zeigt eine alternative Ausführungsform, bei welcher innerhalb des Verbrennungsluftkanals (6) ein Abluftkanal angeordnet ist und wobei innerhalb des Verbrennungsluftkanal (6) und des Abluftkanals (7), welcher im wesentlichen zentrisch innerhalb des Verbrennungsluftkanals (6) verläuft, Störungselemente (15) vorgesehen sind. Durch die Störungselemente in der Form von lamellenartigen Vorspringen von der Wandung in den Kanalquerschnitt hinein wird die Wärmetauscherfläche vergrößert und die Fließgeschwindigkeit der Luft bzw. des Gases verringert. Dadurch wird der Wärmeaustausch verbessert. Der Abluftkanal weist zudem an seinem tiefsten Punkt einen Kondensatabfluß auf, welcher das innerhalb des Abluftkanals (7) entstehende und nach unten fließende Kondensat abführt. Vorzugsweise sind die Störungselemente (15) innerhalb des Abluftkanals (7) so ausgeführt, dass sie ein Abfließen des Kondensats hin zum Kondensatabfluß nicht behindern. Im gezeigten Fall Zwischen der Kesseloberfläche und der Wandung des Wellrohres ist wiederum ein Wärmeleitvermittler (4) angeordnet.

Der Wärmeleitvermittler (4) ist insbesondere im Falle eines Flächenkontaktes zwischen Verbrennungsluftkanal und Kesseloberfläche optional

## Patentansprüche

1. Vorrichtung zur Erwärmung von Medien, vorzugweise ein Brennwertgerät, aufweisend:
ein luftdichtes Gehäuse (1);
wenigstens einen innerhalb des Gehäuses mündenden Zuluftkanal (2);
wenigstens einen innerhalb des Gehäuses angeordneten Kessel (3), der eine Brennkammer aufweist, innerhalb derer ein Brenner ein Brennstoff-Luft-Gemisch verbrennt;
wenigstens ein Ansauggebläse (6), welches dem Brenner Verbrennungsluft zuführt; und
wenigstens einen Abluftkanal (7) zur Ableitung der bei der Verbrennung entstehenden Verbrennungsabgase,
**dadurch gekennzeichnet, dass**
wenigstens ein Verbrennungsluftkanal (6) vorgesehen ist, welcher sich zumindest teilweise um einen Kessel (3) herum erstreckt und mit diesem thermisch verbunden ist, und wobei der Verbrennungsluftkanal (6) die Mündung (10) des Zuluftkanals (2) mit der Ansaugöffnung (11) des Ansauggebläses (6) luftdicht verbindet.

2. Vorrichtung gemäß Anspruch 1, **dadurch gekennzeichnet, dass** sich der Abluftkanal (7) vorzugsweise vollständig innerhalb des Verbrennungsluftkanals (6) erstreckt.

3. Vorrichtung gemäß Anspruch 2, **dadurch gekennzeichnet, dass** der Verbrennungsluftkanal (6) und der Abluftkanal (7) voneinander hermetisch getrennt sind.

4. Vorrichtung nach einem der Ansprüche 1 bis 3, **dadurch gekennzeichnet, dass** der Verbrennungsluftkanal (6) und/oder der Abluftkanal (7) Wandungen aufweist, die zumindest teilweise als Wellrohr ausgestaltet sind.

5. Vorrichtung nach einem der Ansprüche 2 bis 4, **dadurch gekennzeichnet, dass** der Abluftkanal (7) im wesentlichen zentrisch innerhalb des Verbrennungsluftkanals (6) angeordnet ist.

6. Vorrichtung nach einem der Ansprüche 1 bis 5, **dadurch gekennzeichnet, dass** der Verbrennungsluftkanal (6) und/oder der Abluftkanal (7) innenliegende Störungselemente (15) aufweist, die im Luft- bzw. Abgasstrom liegen und/oder in diesen hinein ragen.

7. Vorrichtung nach einem der Ansprüche 1 bis 6, **dadurch gekennzeichnet, dass** der Abluftkanal (7) an einem tief liegenden Punkt und vorzugsweise an seinem tiefsten Punkt einen integrierten Kondensatabfluss (16) aufweist.

8. Vorrichtung nach Anspruch 7, **dadurch gekennzeichnet, dass** sich der Kondensatabfluss (16) durch den Verbrennungsluftkanal (6) hindurch erstreckt.

9. Vorrichtung nach einem der Ansprüche 1 bis 8, **dadurch gekennzeichnet, dass** der Verbrennungsluftkanal (6) und/oder der Abluftkanal (7) aus wenigstens zwei Halbschalen (9, 9') gebildet wird.

10. Vorrichtung nach Anspruch 9, **dadurch gekennzeichnet, dass** der Verbrennungsluftkanal (6) und der Abluftkanal (7) einstückig miteinander verbunden sind.

11. Vorrichtung nach einem der Ansprüche 9 oder 10, **dadurch gekennzeichnet, dass** die Halbschalen (9, 9') durch Schweißen miteinander verbunden sind.
